# EUROPEAN PATENT APPLICATION

(11) **EP 0 532 818 A1**
(43) Date of publication of application: **24.03.1993**
(21) Application number: 91830553.3
(22) Date of filing: 11.12.1991
(51) Int. Cl.: A47B 47/00, F16B 12/10

(54) **A system of elements for the assembly of a kit type cabinet**

(30) Priority: 18.09.1991 IT PR910040
(71) Applicant: EUROSTEEL ITALIA S.r.l., I-31020 Vidor (Treviso) (IT)
(72) Inventor: Rotelli, Agostino, I-43100 Parma (IT)
(74) Representative: Lanzoni, Luciano

(57) **Abstract**

The side panels (2), base (3) and top (4) of a filing cabinet are assembled swiftly and simply by means of interlocking bars (7) incorporated into each component; the design of the bar remains the same throughout, with holes (8) and projections (9) and at least one catch (10) arranged in such a way that when two bars (7) are offered face to face, a minimal aligning movement suffices to unite the two associated components and obtain a rigid connection with each catch (10) penetrating the opposite bar. The back (5) of the cabinet is secured to the side panels (2) with pins (11) insertable through oblong slots (12) distributed along the meeting edges, and locked by rotating through a quarter turn.

## Description

The invention relates to a system of elements for the assembly of a kit type cabinet, suitable in particular for a roll front cabinet.

Compared to cabinets with hinged or sliding doors, roll front cabinets offer the advantage of totally unobstructed frontal access obtained by virtue of the fact that the front, embodied normally in two sections, can be rolled back along internal tracks afforded by the side panels and thus concealed.

However, conventional roll front cabinets betray the disadvantage of being embodied generally as a one-piece structure of which the members cannot be dismantled into single components for transport purposes. Thus, the cabinet has to be transported in its finished state, occasioning considerable inconvenience in handling and high freight costs by reason of the extensive space required.

Such difficulties are overcome in part by providing conventional cabinets with hand holes in the side panels, which afford a grip for the special gloves used by removal and freight personnel, though this is clearly an expedient of little practical worth.

The prior art also embraces cabinets manufactured as kits for erection on site, though generally with complicated and costly assembly systems.

The object of the present invention is to overcome such drawbacks by embodying a cabinet which, for a manufacturing cost broadly comparable with that of conventional cabinets of the types mentioned above, affords ease of transportation and swift and simple erection, and requires no tools for assembly.

A further object is to achieve a saving in freight costs and reduce the labour required in handling and assembly of the cabinet.

The stated objects are fully realized in a system of elements according to the invention, by means of which to effect the assembly of a cabinet supplied in kit form of the type comprising:
- two side panels;
- a base;
- a top;
- a one-piece or sectional back;
- a roll front embodied in one or more pieces, such as can be drawn back and concealed within the side panels or the top; or hinged doors, characterized in that it comprises:
- a plurality of identical interlocking bars applied to the side panels, to the base and to the top, each affording a plurality of holes, a plurality of anchor projections and at least one locking catch or tooth, by means of which to assemble the side panels with the base and the top of the cabinet;
- a plurality of locking pins insertable through respective slots distributed along the peripheral edges of the sections forming the back and along the rear edge of each side panel, by means of which to assemble the back sections with one another and with the side panels.

The invention will now be described in detail, by way of example, with the aid of the accompanying drawings, in which:
- fig 1 and 2 are overall and detail illustrations respectively, both in perspective, of the single components of the cabinet and of the elements used in their assembly;

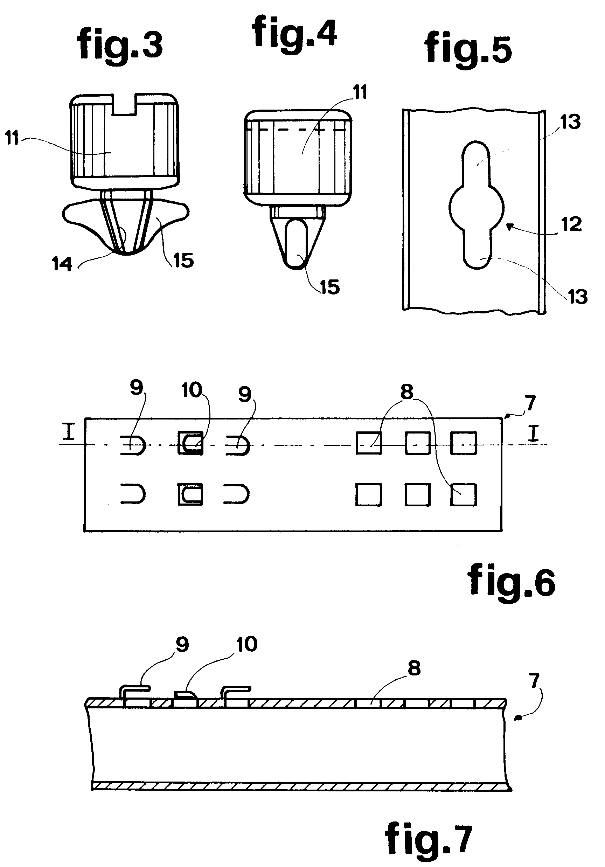

- figs 3, 4 and 5 are different views of pins and slots used in assembly of the cabinet;
- fig 6 is the frontal view of one element of the system disclosed;
- fig 7 is the section through I-I in fig 6.

With reference to the drawings, 1 denotes the assembly of discrete components making up a roll front cabinet manufactured and supplied as a kit.

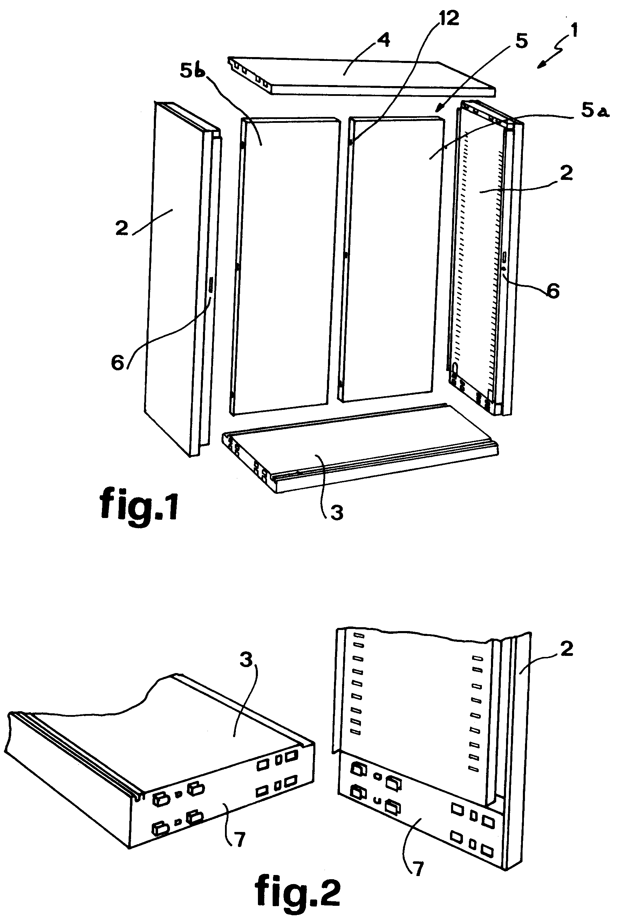

The components in fig 1 comprise two side panels 2, a base 3, a top 4, and a back panel 5 which in the example illustrated is embodied in two sections 5a and 5b. Advantageously, each side panel 2 consists in a hollow parallelepiped structure accommodating a pre-assembled roll front 6 of conventional design slidable in tracks (likewise conventional) mounted internally of the hollow structure.

7 denotes a bar constituting one element of the system according to the present invention, which affords two rows of holes 8 and projections 9; more exactly, each row comprises a plurality of holes 9 and a plurality of projections 9 in alignment one with another. The bar 7 also affords at least one locking catch or tooth 10 of dimensions such as to engage in one hole 8 of another identical bar.

The bars 7 are incorporated into the sides panels 2 and into the base 3 and top 4, in such a way as to enable a swift and simple assembly of these same components. In effect, it suffices simply to offer each side panel 2 to the corresponding end of the base 3 in such a way that the holes and projections afforded by the bar 7 associated with the panel are aligned with the projections and holes afforded by the bar associated with the base, whereupon a small sideways movement of the panel in relation to the base causes the catch 10 to snap into a respective hole 8 and thus establish a stable and captive interlock between the components.

At all events, bearing in mind the possible need to dismantle the components at some successive stage, the base will be embodied with an inspection hole (not illustrated) through which also to insert a screwdriver or other suitable tool and displace the catch sufficiently to enable separation of the two bars by effecting the necessary sideways movement.

The assembly of the side panels 2 and the top 4 is accomplished likewise in the manner described above but with the sole difference that, in a preferred embodiment, the relative bars will afford single rows of holes and projections.

According to the invention, the connection between the back 5 and the two side panels 2, and between the sections 5a and 5b of the back if embodied in more than one piece, is effected by way of pins 11 likewise constituting an element of the system disclosed.

Each pin 11 comprises a boss 14 with two wings 15, and is insertable in one of a plurality of slots 12 afforded by the back sections 5a and 5b and by the rear edge of each side panel 2.

The single slot 12 comprises a central portion of substantially circular shape with two oppositely disposed appendages 13, such that the diameter of the circular part is less than the distance between the farthest ends of the appendages 13. Thus, the pin 11 is insertable through the slot 12 with the wings 15 and the appendages 13 in axial alignment, and rotatable thereupon (preferably through 90|) in such a way as to offset the wings and appendages and obtain the appropriate locking action.

The foregoing description implies no limitation as regards the ultimate embodiment of the invention.

For example, the system of elements disclosed might be incorporated into the components of a cabinet with a single roll front stowed in one side panel, or with a single roll front stowed in the top, or indeed of a cabinet with conventional hinged doors, typically for office use.

## Claims

1. A system of elements for the assembly of a kit type cabinet comprising:
- two side panels (2);
- a base (3);
- a top (4);
- a one-piece or sectional back (5; 5a-5b);
- a roll front (6) embodied in one or more pieces, such as can be drawn back and concealed within the side panels (2) or the top (4); or hinged doors,
characterized
in that it comprises:
- a plurality of identical interlocking bars (7) applied to the side panels (2), to the base (3) and to the top (4), each affording a plurality of holes (8), a plurality of anchor projections (9) and at least one locking catch or tooth (10), by means of which to assemble the side panels with the base and the top of the cabinet;
- a plurality of locking pins (11) insertable into corresponding slots (12) distributed along the peripheral edges of the sections (5a, 5b) forming the back (5) and along the rear edge of each side panel (2), by means of which to assemble the back sections (5a, 5b) with one another and with the side panels (2).

2. A system of elements as in claim 1, wherein each bar (7) is associated stably with another bar by breasting the two together and sliding either or both in relation to the other in such way that the projections (9) and holes (8) of the one bar and the holes (8) and projections (9) of the other are made to interlock.

3. A system of elements as in claim 1, wherein each bar (7) comprises two parallel rows of holes (8) and projections (9) each with the relative holes and projections disposed in mutual alignment.

4. A system of elements as in claim 1, wherein each bar (7) comprises a single row of holes (8) and projections (9) disposed in mutual alignment.

5. A system of elements as in claim 1, wherein each bar (7) comprises at least one catch or tooth (10) positioned to engage in one hole (8) of another bar and thus lock the two bars rigidly together.

6. A system of elements as in claims 1 and 5, wherein each bar (7) is accessible internally by way of at least one hole, provided in the base or the top, through which the catches (10) can be located and unseated to dismantle the cabinet.

7. A system of elements as in claim 1, wherein the shape of the single slot (12) appears substantially circular with two oppositely disposed appendages (13), such that the diameter of the circular part is less than the distance between the farthest extremities of the two appendages.

8. A system of elements as in claims 1 and 7, wherein the single pin (11) comprises a boss (14) affording two oppositely disposed wings (15), insertable respectively through the circular portion of the slot (12) and through the two oppositely disposed appendages (13), and rotatable following insertion in such a manner as to offset the wings from the appendages and thus disallow removal of the pin from the slot.

9. A system of elements as in claim 1, wherein the side panel (2) of the cabinet consists in a hollow parallelepiped structure internally accommodating a pre-assembled roll front (6) mounted slidably to tracks within the hollow structure.
